# EUROPÄISCHE PATENTANMELDUNG

(11) **EP 1 172 874 A2**
(43) Veröffentlichungstag der Anmeldung: **16.01.2002**
(21) Anmeldenummer: 01810568.4
(22) Anmeldetag: 13.06.2001
(51) Int. Cl.: H01M 8/04

(54) **Anlage mit Hochtemperatur-Brennstoffzellen**

(30) Priorität: 12.07.2000 EP 00810611
(71) Anmelder: Sulzer Hexis AG, 8400 Winterthur (CH)
(72) Erfinder: Ströhle, Werner, 6845 Klaus (AT); Nani, Marco, 9475 Sevelen (CH); Gamper, Thomas, 8219 Trasadingen (CH)
(74) Vertreter: Sulzer Management AG

(57) **Zusammenfassung**

Die Anlage enthält Hochtemperatur-Brennstoffzellen, die eine Batterie (1) bilden, in der elektrochemische Reaktionen mit einem Brennstoff (6) und einem Sauerstoff enthaltenden Gas (5) unter einer Erzeugung von elektrischem Strom (8) und einem heissen, Abwärme transportierenden Abgasstrom (7) durchführbar sind. Die Anlage umfasst eine Einrichtung mit folgenden Komponenten:
- einen Kreislauf (2) mit einem Wärmeträgermedium (20),
- einen ersten Wärmetauscher (21) für den Abgasstrom, in dem ein Teil der Abwärme an das Wärmeträgermedium übertragbar ist,
- am Ausgang des Wärmetauschers (21) eine Abzugsleitung für den Abgasstrom, die zu einem Kamin (10) führt, wobei im Kamin die Abgastemperatur einen vorgegebenen Wert nicht überschreiten darf, und
- mindestens eine Wärmesenke (22), insbesondere in Form eines weiteren Wärmetauschers, in der die auf das Wärmeträgermedium übertragene Abwärme bei Bedarf zumindest teilweise als Überschusswärme aus dem Kreislauf entfernbar ist, wobei die Überschusswärme weder für eine Raumheizung (3) und/oder Brauchwassererwärmung (3) noch einen anderen Verwendungszweck (3) nutzbar ist.

## Beschreibung

Die Erfindung betrifft eine Anlage mit Hochtemperatur-Brennstoffzellen und Verfahren zum Betreiben der Anlage.

Hochtemperatur-Brennstoffzellen, beispielsweise des SOFC-Typs ("Solid Oxid Fuel Cell"), ermöglichen eine Nutzung der mit den Brennstoffzellen umgewandelten Energie beim Betrieb einer Gebäude-Infrastruktur. Es wird dabei sowohl die elektrische Energie, die aufgrund elektrochemischer Prozesse erzeugt wird, als auch die thermische Energie, die in Form von heissen Abgasen der Prozesse anfällt, genutzt. Ist die Gebäude-Infrastruktur für eine Klimazone vorgesehen, in der die Wetterbedingungen, besonders die Umgebungstemperaturen sich markant ändern, so ist es erforderlich, zeitweise Überschusswärme an die Umgebung abzugeben. Werden Brennstoffzellen des SOFC-Typs verwendet, so ist die Temperatur des Abgases so hoch, dass das Abgas - um Überschusswärme los zu werden-nicht direkt über ein Kamin in die Umgebung ausgestossen werden darf. Bei den hohen Temperaturen könnten sich Schädigungen am Kamin ergeben; das heisse Abgas wäre auch eine Gefahrenquelle für die Umwelt.

Aus der EP-A 0 823 742 (= P.6752) sind Anlagen zur simultanen Erzeugung von elektrischer und thermischer Energie bekannt. In diesen Anlagen lässt sich eine mit den Abgasen im Überschuss anfallende Wärmemenge mittels Wärmekraftmaschinen nutzen. Oft sind aber solche Nutzungsmöglichkeiten aufwändig, so dass es wirtschaftlich vorteilhafter ist, Überschusswärme zu eliminieren, indem sie ungenutzt an die Umgebung abgegeben - "entsorgt"-wird.

Aufgabe der Erfindung ist es, eine Anlage mit Hochtemperatur-Brennstoffzellen zu schaffen, die es erlaubt, den Bedarf an elektrischer sowie thermischer Energie einer Gebäude-Infrastruktur zu decken und zeitweise anfallende Überschusswärme an die Umgebung abzugeben, ohne dass dabei Teile der Infrastruktur beschädigt werden oder die Umwelt gefährdet wird. Diese Aufgabe wird durch die im Anspruch 1 definierte Anlage gelöst.

Die Anlage enthält Hochtemperatur-Brennstoffzellen, die eine Batterie bilden, in der elektrochemische Reaktionen mit einem Brennstoff und einem Sauerstoff enthaltenden Gas unter einer Erzeugung von elektrischem Strom und einem heissen, Abwärme transportierenden Abgasstrom durchführbar sind. Die Anlage umfasst eine Einrichtung mit folgenden Komponenten:
- einen Kreislauf mit einem Wärmeträgermedium,
- einen ersten Wärmetauscher für den Abgasstrom, in dem ein Teil der Abwärme an das Wärmeträgermedium übertragbar ist,
- am Ausgang des Wärmetauschers eine Abzugsleitung für den Abgasstrom, die zu einem Kamin führt, wobei im Kamin die Abgastemperatur einen vorgegebenen Wert nicht überschreiten darf, und
- mindestens eine Wärmesenke, insbesondere in Form eines weiteren Wärmetauschers, in der die auf das Wärmeträgermedium übertragene Abwärme bei Bedarf zumindest teilweise als Überschusswärme aus dem Kreislauf entfernbar ist, wobei die Überschusswärme weder für eine Raumheizung und/oder Brauchwassererwärmung noch einen anderen Verwendungszweck nutzbar ist.

Die abhängigen Ansprüche 2 bis 5 betreffen vorteilhafte Ausgestaltungen der erfindungsgemässen Anlage. Die Ansprüche 6 bis 10 beziehen sich auf Verfahren zum Betreiben dieser Anlage.

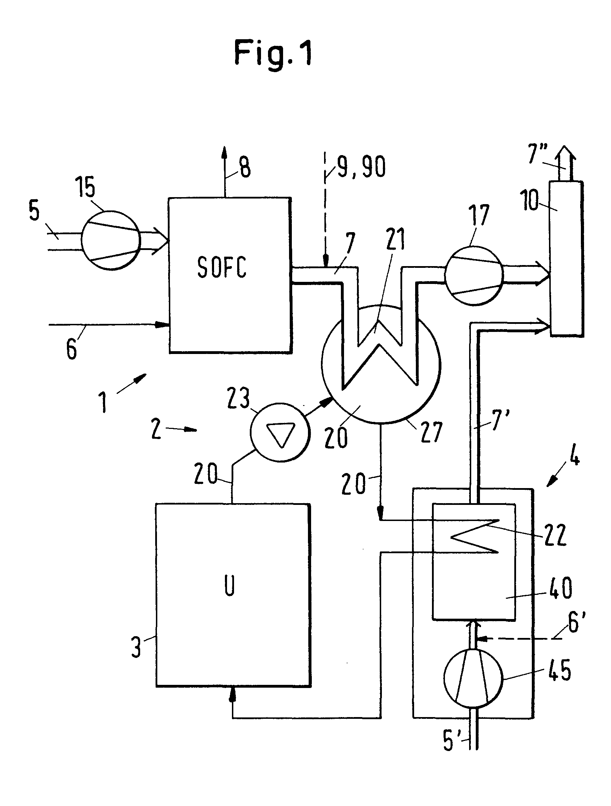

Nachfolgend wird die Erfindung anhand der Zeichnung der einzigen Fig. 1 erläutert. Die Fig. 1 zeigt eine schematische Darstellung der erfindungsgemässen Anlage. Diese Anlage umfasst eine Brennstoffzellen-Batterie 1 mit Zellen beispielsweise des SOFC-Typs, einen Kreislauf 2 mit einem Wärmeträgermedium 20, Einrichtungen 3 zur Wärmeabgabe an einen Verbraucher U, ein Heizgerät 4 für ein teilweises Decken eines überdurchschnittlichen Bedarfs an Heizwärme, und ein Kamin 10, durch das Abgase 7" an die Umgebung abgebbar sind, wobei die Bedingung eingehalten werden muss, dass die Abgastemperatur im Kamin 10 einen vorgegebenen Wert nicht überschreitet (250°C oder 160°C für Kamine aus Aluminium bzw. Kunststoff). Mit einem Gebläse 15 und/oder 17 wird ein Sauerstoff enthaltendes Gas 5, insbesondere Umgebungsluft, in die Batterie 1 eingespeist. Dort bilden das Gas 5 und ein Brennstoff 6 die Reaktanden von elektrochemischen Prozessen, durch die ein elektrischer Strom 8 erzeugt wird. Gleichzeitig erzeugte Abwärme wird mit einem heissen Abgasstrom 7 aus der Batterie 1 transportiert. Es sind in dem Anlageschema der Fig. 1 beide Gebläse 15 und 17 eingezeichnet; auf eines kann verzichtet werden. In der Regel wird nur eines der beiden verwendet, wobei sich mit dem Gebläse 15 ein Druckbetrieb, mit dem Gebläse 17 ein Saugbetrieb ergibt.

Die Einrichtungen 3 zur Wärmeabgabe an einen Verbraucher U umfassen beispielsweise Radiatoren einer Raumheizung und/oder einen Wärmetauscher, der für eine Brauchwassererwärmung verwendet wird.

Ein Teil der Abwärme wird in einem ersten Wärmetauscher 21 des Kreislaufs 2 vom Abgasstrom 7 auf das Wärmeträgermedium 20 übertragen. Das abgekühlte Abgas 7 wird in den Kamin 10 gefördert. Im Kreislauf 2 fördert eine Umwälzpumpe 23 das Wärmeträgermedium 20 in einen weiteren Wärmetauscher 22, der bei Vorliegen einer zu eliminierenden Überschusswärme als eine Wärmesenke verwendet werden kann. Statt der in Fig. 1 angegebenen Umwälzpumpe 23 kann auch eine zweite oder einzige Umwälzpumpe eingesetzt werden, die eine Komponente des Heizgeräts 4 ist.

Die Überschusswärme ist, wie vorausgesetzt wird, weder für eine Raumheizung und/oder Brauchwassererwärmung noch einen anderen Verwendungszweck nutzbar. Der Wärmetauscher 22 und ein Gebläse 45 bilden Teile des Heizgeräts 4. Die Überschusswärme kann auf einen durch das Gebläse 45 geförderten Luftstrom 5' übertragen, in den Kamin 10 oder auch in einen zweiten, nicht dargestellten Kamin weitertransportiert und von dort in die Umgebung abgegeben ("entsorgt") werden. Der Luftstrom 5' muss so gross sein, dass er mit einer genügend tiefen Temperatur in den Kamin 10 eintritt.

Bezogen auf die Richtung des Luftstroms 5' ist der Wärmetauscher 22 stromabwärts in einem Verbrennungsraum 40 angeordnet. In diesem Raum 40 wird während eines Heizbetriebs ein Brennstoff 6' im Luftstrom 5' zu einem Abgas 7' verbrannt und dabei entstandene Verbrennungswärme an den Wärmetauscher 22 abgegeben. Ein solcher Heizbetrieb ist nur zu Zeiten nötig, da keine Überschusswärme zu eliminieren ist, so dass nie die Situation eintritt, dass der Wärmetauscher 22 gleichzeitig für eine Wärmeabgabe an den Luftstrom 5' und eine Wärmeaufnahme aus dem Abgas 7' verwendet werden müsste.

Vor dem ersten Wärmetauscher 21 kann eine in den Abgasstrom 7 mündende Zuführung 9 vorgesehen sein, durch welche ein die Abgastemperatur senkendes Medium 90 zuführt werden kann. Die Überschusswärme oder ein Teil von dieser kann mittels dem Abgasstrom, in dem das Medium 90 enthalten ist, in den Kamin 10 gefördert werden. Das Medium 90 ist z. B. Umgebungsluft, mit der durch Zumischen die Temperatur herabgesenkt wird, oder Wasser, das im Abgasstrom 7 verdampft und dabei eine Absenkung der Temperatur bewirkt.

Der erste Wärmetauscher 21 ist in einem als Wärmespeicher nutzbaren Behälter 27 angeordnet. Das Wärmeträgermedium 20, vorzugsweise Wasser, dient dabei als Speichermedium.

Es sind im Kreislauf 2 weitere Wärmetauscher angeordnet, die - wie bereits erwähnt - für eine Nutzung zwecks Raumheizung und/oder Brauchwassererwärmung verwendet werden. Es kann auch eine Nutzung durch einen weiteren Wärmeverbraucher vorgesehen sein, beispielsweise durch ein als Absorptionswärmepumpe verwendetes Kühlaggregat (vgl. die oben genannte EP-A 0 823 742).

Die erfindungsgemässe Anlage bildet einen Teil einer Gebäude-Infrastruktur. Die Infrastruktur kann isoliert von einem äusseren Stromnetz betrieben werden ("Inselbetrieb"), wobei der im Gebäude zu erwartende Bedarf an elektrischer Energie vollständig durch die Brennstoffzellen-Batterie 1 der Anlage gedeckt wird. Überschüssige Abwärme kann mit dieser Anlage an die Umgebung des Gebäudes abgeführt werden, ohne dass dabei Teile der Infrastruktur beschädigt werden oder die Umwelt gefährdet wird. Bei einem Manko an Abwärme wird die für Heizzwecke zusätzlich benötigte Wärme mittels des Heizgeräts 4 erzeugt.

Ein die erfindungsgemässe Anlage enthaltendes Gebäude kann auch mit einem äusseren Stromnetz verbunden sein. Dieses äussere Stromnetz kann als Puffer bezüglich zeitweise überschüssiger bzw. mangelnder elektrischer Energie genutzt werden. Es kann auch vorgesehen sein, dass der Bedarf an elektrischer Energie 8, wie er auf das Jahr bezogen im Mittel zu erwarten ist, durch die Brennstoffbatterie 1 der Anlage gedeckt wird. In diesem Fall ist, wenn eine starke Abweichung vom Mittel ausbleibt, die Jahresbilanz bezüglich dem Austausch an elektrischer Energie weitgehend ausgeglichen.

Eine in der erfindungsgemässen Anlage anfallende Abwärme, die überschüssig ist, kann auch mittels aufgeheiztem Brauchwasser aus der Anlage, beispielsweise in eine Kanalisation, abgeführt werden. Dieses Verfahren ist als eine Notfalllösung zu betrachten; sie kann als eine zusätzliche Möglichkeit genutzt werden, wenn eine Abwärme-Entsorgung mittels den oben beschriebenen Verfahren nicht ausreicht.

## Patentansprüche

1. Anlage mit Hochtemperatur-Brennstoffzellen, die eine Batterie (1) bilden, in der elektrochemische Reaktionen mit einem Brennstoff (6) und einem Sauerstoff enthaltenden Gas (5) unter einer Erzeugung von elektrischem Strom (8) und einem heissen, Abwärme transportierenden Abgasstrom (7) durchführbar sind, welche Anlage eine Einrichtung mit folgenden Komponenten umfasst:
- einen Kreislauf (2) mit einem Wärmeträgermedium (20),
- einen ersten Wärmetauscher (21) für den Abgasstrom, in dem ein Teil der Abwärme an das Wärmeträgermedium übertragbar ist,
- am Ausgang des Wärmetauschers (21) eine Abzugsleitung für den Abgasstrom, die zu einem Kamin (10) führt, wobei im Kamin die Abgastemperatur einen vorgegebenen Wert nicht überschreiten darf, und
- mindestens eine Wärmesenke (22), insbesondere in Form eines weiteren Wärmetauschers, in der die auf das Wärmeträgermedium übertragene Abwärme bei Bedarf zumindest teilweise als Überschusswärme aus dem Kreislauf entfernbar ist, wobei die Überschusswärme weder für eine Raumheizung (3) und/oder Brauchwassererwärmung (3) noch einen anderen Verwendungszweck (3) nutzbar ist.

2. Anlage nach Anspruch 1, **dadurch gekennzeichnet, dass** die Überschusswärme mit einem zweiten Wärmetauscher (22) und einem durch ein Gebläse (45) erzeugten Luftstrom (5') entfernbar ist, wobei der Wärmetauscher und das Gebläse Teile eines Heizgeräts (4) bilden, und - bezogen auf die Richtung des Luftstroms - der zweite Wärmetauscher stromabwärts in einem Raum (40) angeordnet ist, der während eines Heizbetriebs für eine Verbrennung eines Brennstoffs (6') im Luftstrom vorgesehen ist und der über eine Leitung für ein bei der Verbrennung entstandenes Abgas (7') an den genannten Kamin (10) oder einen zweiten Kamin angeschlossen ist.

3. Anlage nach Anspruch 1 oder 2, **dadurch gekennzeichnet, dass** vor dem ersten Wärmetauscher (21) eine in den Abgasstrom (7) mündende Zuführung (9) vorgesehen ist, durch welche ein die Abgastemperatur senkendes Medium (90) zuführbar ist, und dass die Überschusswärme mittels dem das genannte Medium enthaltenden Abgasstrom in den Kamin (10) förderbar ist.

4. Anlage nach einem der Ansprüche 1 bis 3, **dadurch gekennzeichnet, dass** der erste Wärmetauscher (21) in einem als Wärmespeicher nutzbaren Behälter (27) angeordnet ist, wobei insbesondere das Wärmeträgermedium (20) als Speichermedium verwendbar ist.

5. Anlage nach einem der Ansprüche 1 bis 4, **dadurch gekennzeichnet, dass** weitere Wärmetauscher im Kreislauf (2) für eine Nutzung zwecks Raumheizung und/oder Brauchwassererwärmung oder für eine Nutzung durch einen weiteren Wärmeverbraucher - beispielsweise ein als Absorptionswärmepumpe verwendetes Kühlaggregat - angeordnet sind.

6. Verfahren zum Betreiben einer Anlage gemäss einem der Ansprüche 1 bis 5, wobei die Anlage (1, 10, 2, 3, 4) einen Teil einer Gebäude-Infrastruktur bildet, die Infrastruktur isoliert von einem äusseren Stromnetz betrieben wird, die im Gebäude zur Verfügung zu stellende elektrische Energie vollständig durch die Brennstoffzellen (1) der Anlage gedeckt wird und überschüssige Abwärme an die Umgebung des Gebäudes abgeführt wird.

7. Verfahren zum Betreiben einer Anlage gemäss den Ansprüchen 6 und 2, **dadurch gekennzeichnet, dass** bei einem Manko an Abwärme die für Heizzwecke zusätzlich benötigte Wärme mittels des Heizgeräts (4) erzeugt wird.

8. Verfahren zum Betreiben einer Anlage gemäss einem der Ansprüche 1 bis 5, wobei ein die Anlage (1, 10, 2, 3, 4) enthaltendes Gebäude mit einem äusseren Stromnetz verbunden ist und das äussere Stromnetz als Puffer bezüglich zeitweise überschüssiger bzw. mangelnder elektrischer Energie genutzt wird.

9. Verfahren nach Anspruch 8, **dadurch gekennzeichnet, dass** die Anlage so ausgelegt ist, dass der Bedarf an elektrischer Energie, wie er im Mittel zu erwarten ist, durch eine oder mehrere Brennstoffbatterien (1) der Anlage gedeckt werden kann.

10. Verfahren nach einem der Ansprüche 6 bis 9, **dadurch gekennzeichnet, dass** überschüssige Abwärme mittels aufgeheiztem Brauchwasser aus der Anlage, beispielsweise in eine Kanalisation, abgeführt wird.
